# EUROPEAN PATENT SPECIFICATION

(11) **EP 3 588 020 B1**
(45) Date of publication and mention of the grant of the patent: **10.03.2021**
(21) Application number: 19172483.0
(22) Date of filing: 03.05.2019
(51) Int. Cl.: G01F 23/26, F25C 1/25

(54) **DEVICE AND METHOD FOR PRODUCING ICE**
VORRICHTUNG UND VERFAHREN ZUR HERSTELLUNG VON EIS
DISPOSITIF ET PROCÉDÉ POUR PRODUIRE DE LA GLACE

(30) Priority: 22.06.2018 IT 201800006580
(43) Date of publication of application: 01.01.2020
(73) Proprietor: CASTEL MAC S.R.L., 31033 Castelfranco Veneto (TV) (IT)
(72) Inventor: SPINETTI, Alberto Italo, 31033 CASTELFRANCO VENETO TV (IT)
(74) Representative: Burchielli, Riccardo

(56) References cited:
- WO-A1-2008/013369
- KR-A- 20090 092 387
- US-A1- 2012 031 114
- US-A1- 2012 247 130
- US-A1- 2017 059 386
- US-B1- 6 337 959

## Description

### Technical field

This invention relates to a device for producing ice to be used, for example, for keeping fish fresh on counters of shops and supermarkets, for preparing cocktails and other cold drinks and more in general to be used in the food industry.

### Background art

There are prior art machines called "ice makers" designed to produce ice in relatively large quantities to be used, for example, for keeping fish fresh on counters of shops and supermarkets, for preparing cocktails and other cold drinks, for making bread or in general to be used in the food, pharmaceutical or medical industry.

An ice maker is currently able to produce, approximately, between 10 and 1000 kilograms of ice per day.

The ice can be produced in the form of slabs, to be subsequently ground or broken, or in the form of cubes, balls or chips; the latter can also be compacted into small cylinders.

The current ice making machines operate by cooling water with an evaporator of a cooling circuit.

The water directly touches the evaporator and is cooled by it until freezing.

When the evaporator is covered by a layer of ice of the desired thickness, it is defrosted by introducing hot gas which causes the detachment of the mass of ice.

The thickness and uniformity of the ice formed on the evaporator is currently determined either indirectly by measuring a temperature on the evaporator or more frequently by directly measuring the dimensions of the ice formed by means of dimensional measurement devices or conductivity sensors which are put into contact with the slab of ice formed by means of various types of sensors immersed or in any case in contact with the water in the tank.

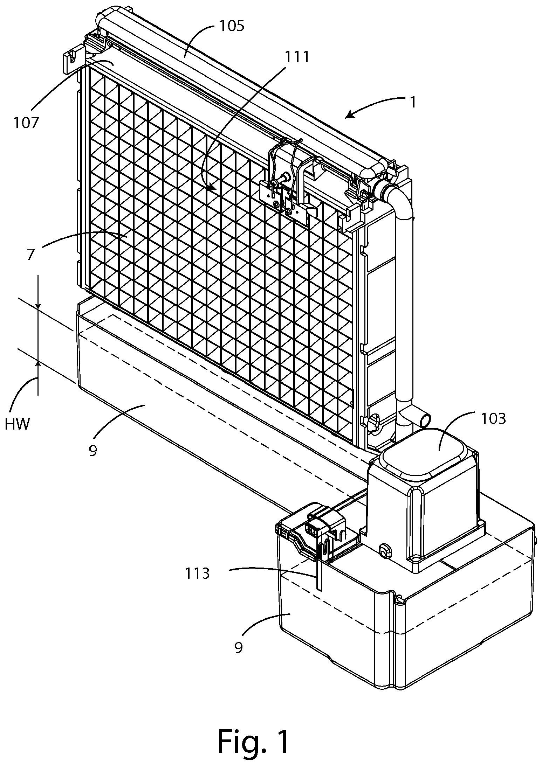

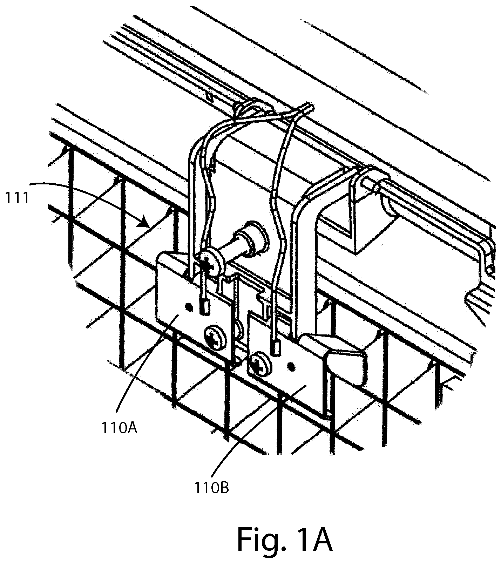

An example of a prior art ice thickness sensor is shown in Figure 1, 1A: in the prior art ice making machine 1 the water drawn by the pump 103 reaches the distributor 105, then drips on the tray 107 and then on the evaporator 7 which forms a grid of cells.

The known sensor for measuring the thickness of the ice 111 comprises two electrical contacts 110A, 110B.

When the grid of cells 7 is not covered by ice or it is only slightly covered, the two contacts 110A, 110B are opened - the water which drips from above is not sufficient to close them - whilst when the desired thickness of ice is formed on the evaporator 7 the contacts 110A, 110B close and start the defrosting cycle.

The prior art ice making machine 1 is also equipped with a level sensor 113 which signals when the level HW of the water in the tank 9 has reached or exceeded a predetermine limit level.

In order for both the sensors 111, 113 to operate they must be immersed in the water and they measure substantially an electrical conductivity, and they therefore have various drawbacks; for example, they require frequent maintenance and manual adjustments by trained personnel of the ice making machine manufacturer, since the personnel of the company which purchased and uses the machine are not sufficiently skilled.

The specifically trained and authorised technical support is also currently necessary because - as shown, for example in Figure 1 - in order to adjust the sensors it is necessary to access the innermost parts of the machine, thus interrupting production and producing further additional costs.

The calibration of the current ice thickness sensors 111 is a various complex and delicate operation as it is carried out by screwing and unscrewing, with a screwdriver, common screws which do not have a micrometric thread.

Moreover, since they are immersed in the water which is often rich in mineral salts, the prior art sensors become encrusted over time with limescale which can eventually completely adversely affect the operation, by "blinding them" - forming, for example, limescale bridges which permanently close the contacts 110A, 110B - thereby rendering necessary and frequent the above-mentioned cleaning and maintenance operations on the machines.

In order to avoid the formation of limescale and the excessive sedimentation of all the other minerals, the accumulation tank or bowl is currently regularly and completely emptied of all the water; in fact, minerals do not sediment in the ice normally produced, and the concentration of mineral salts increases in the water which remains in the bowl; the water is completely replaced with new water which is less rich in lime and the other mineral salts.

There is also often an actual need due to the particular type of water of the place of installation of the machine, which often causes excessive waste of water, or an insufficient change of water and therefore an excessive presence of limescale in the accumulation tray or bowl.
A device for producing ice and a process for using it, with technical features that can be considered the closest state of the art to the following invention, features that are present in the preamble of the attached claim 1, are described, for example, in the patent document US2012/247130A1.

The author of the invention considers that the current sensors for automatically controlling ice making machines have relatively poor precision and reliability and very delicate.

An aim of the invention is to overcome the above-mentioned drawbacks of the prior art and provide a device for producing ice which controls the formation of the ice with greater precision and reliability and requires a less frequent and a simpler maintenance.

### Disclosure of the invention

According to a first aspect of the invention, this aim is achieved with a device for producing ice having the characteristics according to claim 1.

In a device according to a particular embodiment of the invention, the level sensor (15, 15', 15") is designed for measuring the level of the water in the control container (9) in a substantially analogue manner or in a substantially discrete manner.

In a device according to a particular embodiment of the invention, the control container (9) comprises one or more of the following elements: a tray, a tank, a siphon or also a simple stretch of conduit with a more or less uniform cross-section.

According to a second aspect of the invention, this aim is achieved with a process having the characteristics according to claim 15.

In a process according to a particular embodiment of the invention, in the operation S.2) the cooling surface (7, 7') comes into contact with water coming from the control container (9, 9'), cooling it and freezing it.

In a process according to a particular embodiment of the invention, the process comprises the operation of coating with ice at least part of the cooling surface (7, 7'), freezing water coming from control container(9, 9').

Further features of the invention are the object of the dependent claims.

The advantages which can be achieved with this invention are more apparent, to technicians in the sector, from the following detailed description of several particular example embodiments of a non-limiting nature, illustrated with reference to the following schematic figures.

### List of drawings

Figure 1 shows a perspective view of the inside of a device for producing ice of known type;
Figure 1A shows a detail of the ice thickness sensor of the device of Figure 1;
Figure 2 shows a perspective view of the inside of a device for producing ice according to a first embodiment of the invention;
Figure 3 shows a front view of a first embodiment of a level sensor which can be used in the device for producing ice of Figure 2 or 10;
Figure 4 shows a front view of a second embodiment of a level sensor which can be used in the device for producing ice of Figure 2 or 10;
Figure 5 shows a diagram of the electrical connection of the armatures of the discrete sensor of Figure 4;
Figure 6 shows a side view of the control tank of the device for producing ice of Figure 1;
Figure 7 shows a side view of the control tank of a device for producing ice according to a further embodiment of the invention;
Figure 8 shows an example of a calibration curve of the sensor of Figure 3, 4 or 9;
Figure 9 shows a front view of a third embodiment of a level sensor which can be used in the device for producing ice of Figure 2 or 10;
Figure 10 shows a side view, partly in cross-section, of a device for producing ice according to a further embodiment of the invention.

### Detailed description

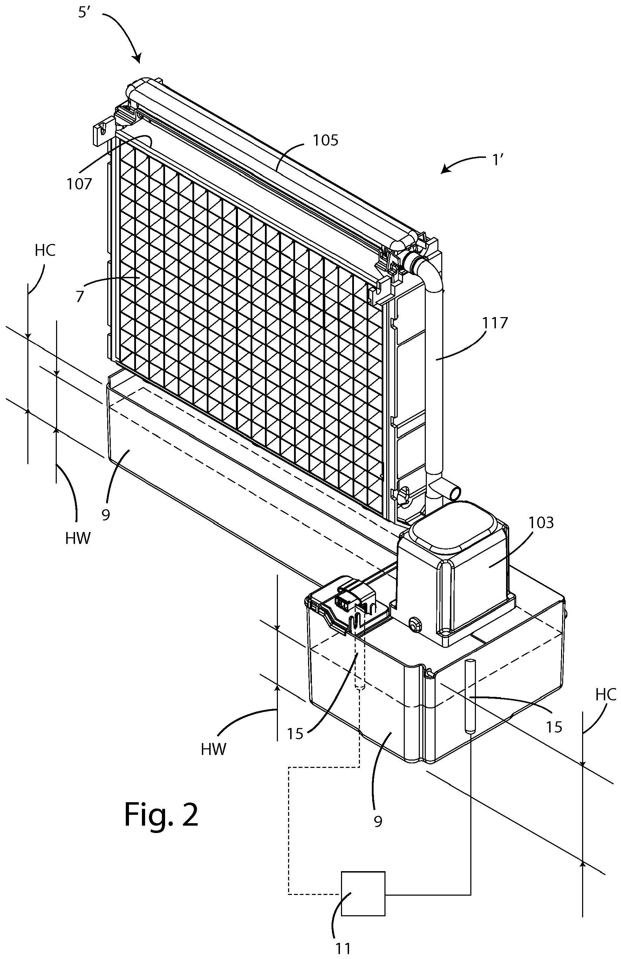

Figure 2 is relative to a device for producing ice according to a particular embodiment of the invention, labelled as a whole with the numeral 1.

The device 1' can be designed for producing, for example, ice in slabs and/or in cubes or more generally ice to be used, for example, for keeping fish fresh on counters of shops and supermarkets, for preparing cocktails and other cold drinks, for making bread or in general to be used in the food, pharmaceutical or medical industry.

According to an aspect of the invention, the device for producing ice 1' comprises:
- an ice forming station 5' in turn comprising a cooling surface 7 designed to come into contact with water, cooling it and transforming it into ice;
- a control container 9, 9' designed to contain the liquid water to come into contact with the cooling surface 7, 7'; and
- a level sensor 15, 15', 15" designed for measuring the level HW of the water in the control container 9, 9';
- a control system 11 designed for controlling the cooling surface 7, 7' on the basis of the measurements of the level sensor 15, 15'.

The level sensor 15, 15' is designed for measuring the level HW of the water in the control container 9, 9' measuring an electrical capacitance associated with the quantity of water present in the control container 9, 9'.

Advantageously, the cooling surface 7 is formed on an evaporator of a heat carrier fluid cooling circuit.

As well as the evaporator 7, 7' the heat carrier fluid cooling circuit can comprise a capacitor, a compressor and an expansion valve or a cooling fluid lamination component (not illustrated).

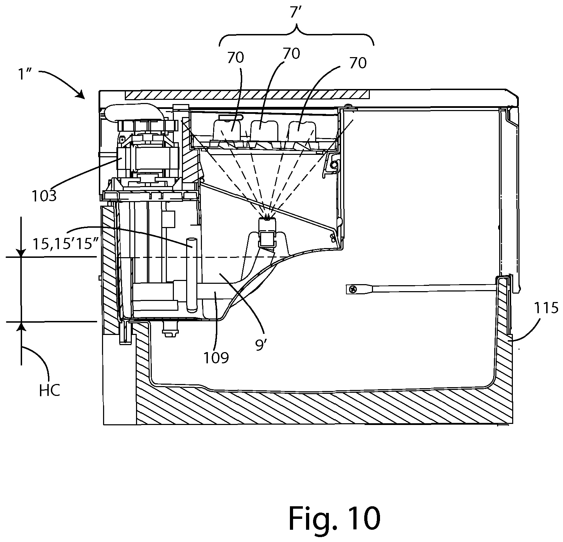

The cooling surface 7, 7' can form, for example, a grid of cells as shown in Figure 2, or form one or more cups 70 as shown in the embodiment of Figure 10.

As shown, for example, in the embodiment of Figure 2, the cooling surface can have an overall planar shape whilst in other embodiments not illustrated it can also have convex or concave shapes, with a single or double curvature.

As shown in the embodiment of Figure 2, the ice making machine 1' can be equipped with a pump 103, a distributor 105 and a tray 107.

The grill or other cooling surface 7 is preferably and substantially vertical, and preferably above or close to the top of the cooling surface 7 are preferably located the distributor 105 and the tray 107.

The device for producing ice 1' is preferably designed for changing the cooling surface 7, during normal operation, a temperatures equal to or less than-15°C.

The control container 9 can be, for example, a tray (Figures 2, 10), a tank, a siphon or also a simple stretch of conduit with a more or less uniform cross-section.

The control system 11 can comprise, for example, a logic unit, such as, for example, an electronic microprocessor, designed for determining the quantity, thickness and/or weight of the ice present in the ice forming station 5 in on the basis of the measurements of the level sensor 15, 15', 15".

Advantageously, the level sensor 15, 15', 15" is of the capacitive type which, as explained in more detail below, allows any direct contact with the water charged with mineral salts to be avoided.

More in detail, the level sensor 15 can comprise one or more positive and/or negative armatures 17, 19 of at least one hypothetical capacitor.

The dielectrics of the hypothetical capacitor means either the material and/or the space, which may also be empty, which influences the electrical capacitance measured by the sensor 15, 15'.

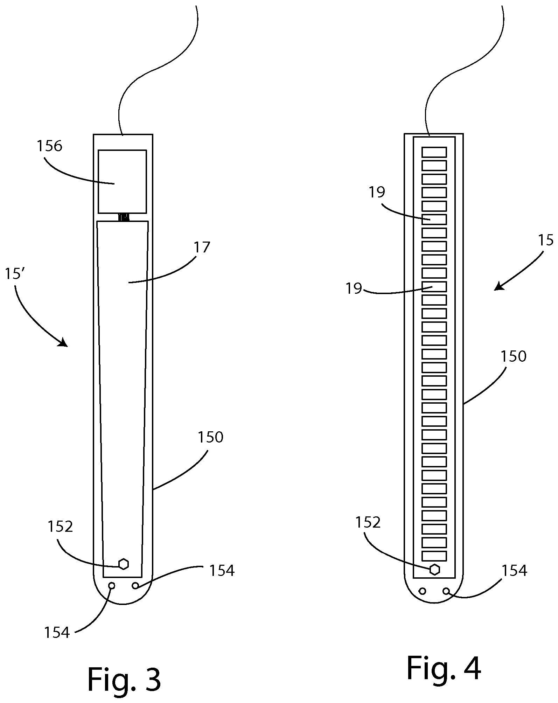

As shown, for example, in the embodiment of Figure 3, 4, 9, the other positive or negative armature of the at least hypothetical capacitor can be formed by the water contained in the tray or other control container 9.

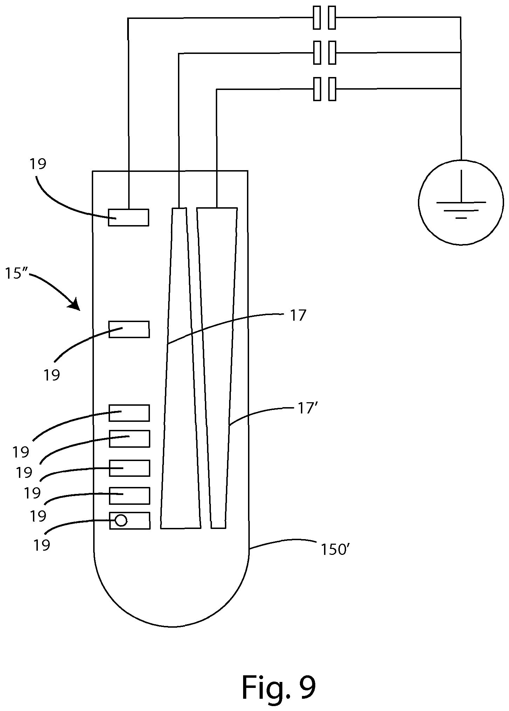

As shown, for example, in the embodiments of Figures 3, 9, the armatures 17, 17' can have a more or less elongated overall form and each of them can advantageously extend on a significant portion of the height HC of the control container 9; for example, it can extend at least over a quarter, more preferably at least over half, more preferably at least over three-quarters and even more preferably at least over five-sixths of the height HC of the control container 9.

More preferably, the armature 17 of the level sensor 15' or the armatures 17, 17' of the sensor 15" extend over at least the entire height HC of the control container 9 or at least over five-sixths, four-fifths, three-quarters or two-thirds of its height HC.

The assembly formed by the plurality of armatures 19 also advantageously extends on a significant portion of the height HC of the control container 9; for example, it extends at least over a quarter, more preferably at least over half, more preferably at least over three-quarters and even more preferably over four-fifths of the height HC of the control container 9.

More preferably, the assembly formed by the plurality of armatures 19 extends at least over the entire height HC of the control container 9.

The armatures 17, 17', 19 or other sensitive elements of the capacitive sensor 15, 15', 15" are made from an electrically conductive material.

The armatures 19 are preferably arranged on the sensor 15, 15" in such a way as to form one or more rows preferably but not necessarily rectilinear.

Each of the non-oblong armatures 19 can, on the other hand, have the approximate form of a notch if necessary flat, of a button, square or rectangular with a substantially squat shape (approximately of length equal to or less than twice or three times their height).

When the armature 17, 17' is only one, it can comprise, for example, an oblong strip, a sheet or a wire of metallic material or other electrical conductor (Figure 2).

When an oblong armature 17, 17' is provided, the capacitive level sensor 15', 15" is of the substantially continuous type and emits a substantially analogue electrical output signal, which may, if necessary, be subsequently discretized.

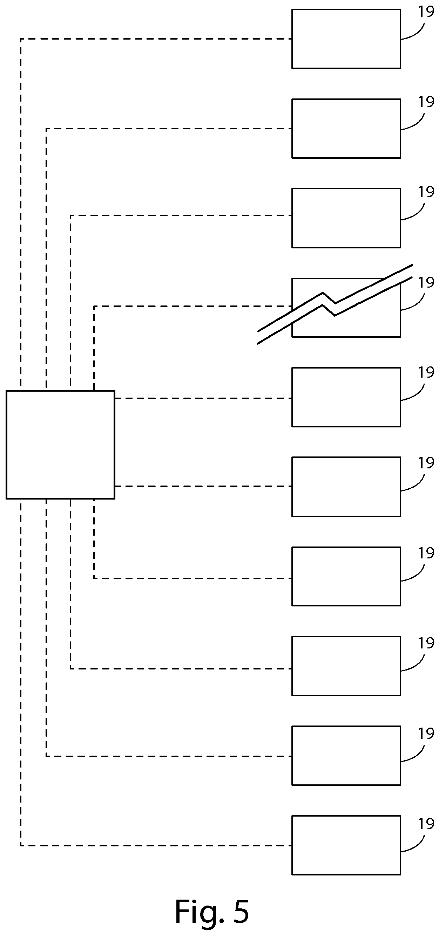

When the level sensor 15 is equipped with a plurality of armatures 19 of a hypothetical capacitor, they are electrically connected in parallel to each other so as to have the same polarity (Figure 5).

The level sensor 15 is preferably equipped with at least four armatures 19, more preferably five, at least ten, at least fifteen armatures 19 and even more preferably with at least twenty armatures 19.

Clearly, the greater the number of armatures in parallel 19, the greater is the precision of the level sensor 15.

When a plurality of armature 19 is provided, the capacitive level sensor 15 is of the substantially discrete type and emits a substantially discrete electrical output signal, that is to say, quantized or digital.

On the basis of the above, the discrete capacitive sensor 15 of Figure 4, 5 can be able to distinguish four, five, ten, fifteen or twenty different values of the water level in the tray or other control container 9.

During the normal operation of the device 1', 1" the oblong armatures 17 and the rows of armatures 19 preferably extend in vertical directions or, in any case, in low-high directions.

As shown in Figures 3, 4, 9, the capacitive level sensor 15, 15', 15" can be equipped with a shell or other outer protective casing 150, for example in the form of a rod, tab, case, cylinder or bar.

The armatures 17, 17', 19 can protrude outside the casing 150 or be enclosed by it and insulted from the outside environment.

The protective casing 150 can be made, for example, of plastic material, advantageously of food-safe plastic, and can be subjected to a suitable nano-technological treatment which slows down the deposit of lime (by the deposit of quartz of a few microns).

Advantageously, the capacitive level sensor 15 could also comprise, preferably enclosed in the same protective casing 150, one or more of the following additional sensors:
- a temperature probe or other sensor 152 (Figure 3, 4, 9);
- an electrical conductivity sensor 154.

As shown in the embodiment of Figure 3, a sensor 15, 15', 15" can be equipped with an electronic card 156 which can control its operation.

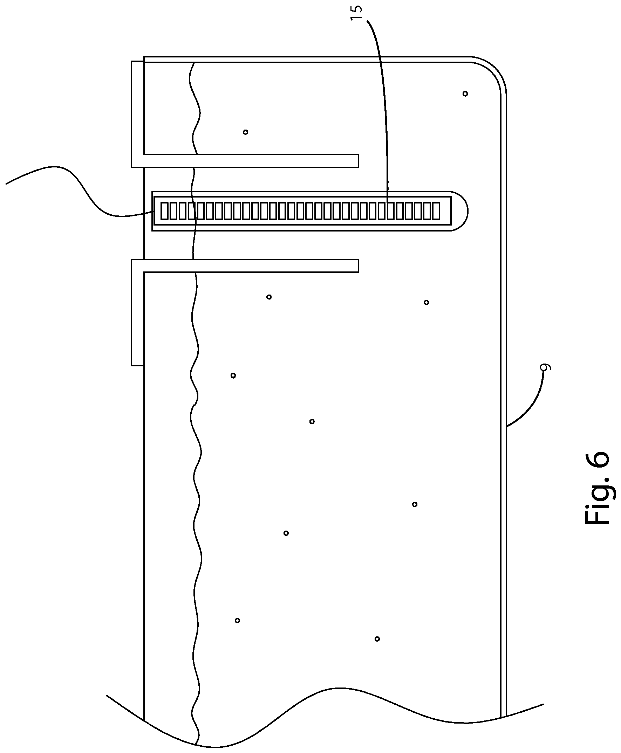

As shown, for example, in the embodiment of Figure 6, the capacitive level sensor 15, 15', 15" can be directly immersed, with a relative protective casing 150, in the water contained in the tray or other control container 9.

The sensor 15 arranged in this way is drawn with dashed lines in Figure 2.

This arrangement improves the reading precision and reliability of the sensor.

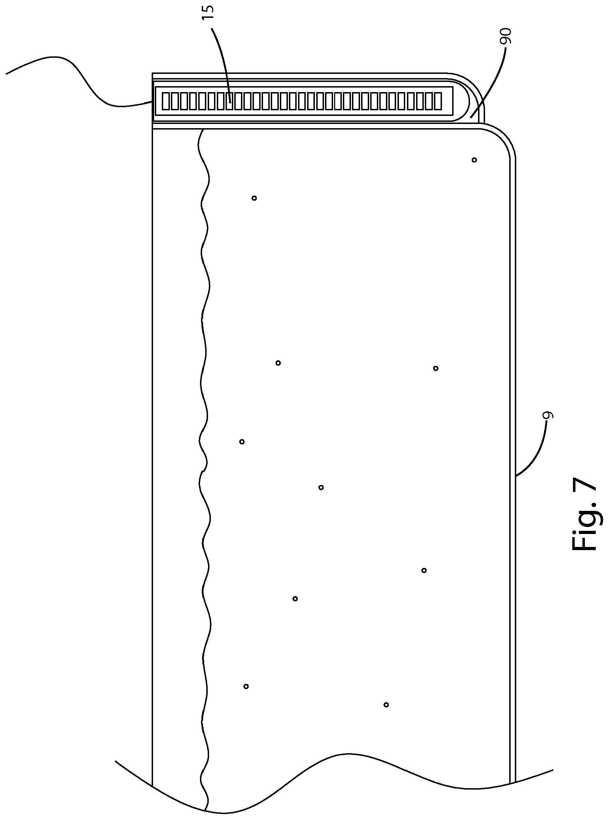

However, as shown in the embodiment of Figure 7, the capacitive level sensor 15, 15', 15" can be positioned in a separate housing 90 in a sealed fashion from the tray or other control container 9 but in contact, or adjacent or very close to a wall of the control container 9, in such a way that the sensor 15, 15', 15" is able to measure the variations of level of the water through the wall of the container 9.

This arrangement facilitates the access, cleaning, replacement and maintenance of the sensor.

The sensor 15 arranged in this way is drawn with solid lines in Figure 2; clearly, the device 1' of Figure 2 does not necessarily have two level sensors 15 and it preferably has only one.

Preferably, the capacitive level sensor 15 is arranged with its armatures 17 or 19 resting on or in any case in contact with an outer wall of the control container 9, as shown, for example, in Figure 6.

As already partly mentioned, Figure 10 shows a second embodiment of the device for producing ice 1" according to a further embodiment of the invention.

In the device 1" the cooling surface 7' forms a plurality of cups 70 the outlets of which substantially face downwards and are positioned on a surface which is, for example, planar.

If the cooing surface 7' is formed on an evaporator of a fluid-type cooling surface, stretches of the pipe in which the heat transfer fluid flows can be welded on the outer walls of the cups 70.

The device 1" is equipped with a control container 9' in the form, for example, of a tray.

The plurality cups 70 substantially form a ceiling.

A pump 103 draws water from the tray 9' and sprays it upwards against the cups 70 through the pipe 109 and a suitable nozzle positioned on a relative downstream end.

Part of the water sprayed freezes on the surface of the cup 70 and progressively forms, in successive layers, a cube or other block of ice which may be possibly hollow.

The device for producing ice 1', 1" can be made, for example, as a separate machine (Figure 10), comprising, for example, a carter 115 or other outer casing made of sheet metal and/or plastic material, preferably heat-insulating, and containing inside it one or more of the following units: the ice forming station 5', the evaporator or other cooling surface 7', the control container 9, 9' the level sensor 15, 15', 15" and the control system 11.

A description is given below of an example of use and operation of the device for producing ice 1 described above.

In the current jargon of the trade the step of forming ice in an ice making machine of the type of the device 1 is called the "cold phase", whilst the step of defrosting the cooling surface 7 is generally called the "warm phase".

At the start of the cold phase, by means of a tap or other valve, not illustrated, the tray or other control container 9 is filled with drinking water up to a predetermined maximum level.

The pump 103 draws water from the control container 9 and, through the conduit 117, sends it to the distributor 105.

From here the water drips on the cooling surface 7 cooled by the above-mentioned cooling system (not illustrated), at least part of it freezes and progressively coats and fills the cells of the cooling surface with ice.

Any water which does not freeze on the surface 7 drips or drains and returns by gravity into the tray 9.

The capacitive level sensor 15 or 15' or 15" measures the variation over time of the level of water in the tank or other control container 9.

For this purpose, the logic unit 11 or other logic unit can be programmed or in any case designed to take into account any nonlinearity of the output signal of the sensor 15 due to particular shapes of the container 9, in such a way that there is preferably a linear relation between the variation of the level of water in the container 9 and the output signal of the sensor 15.

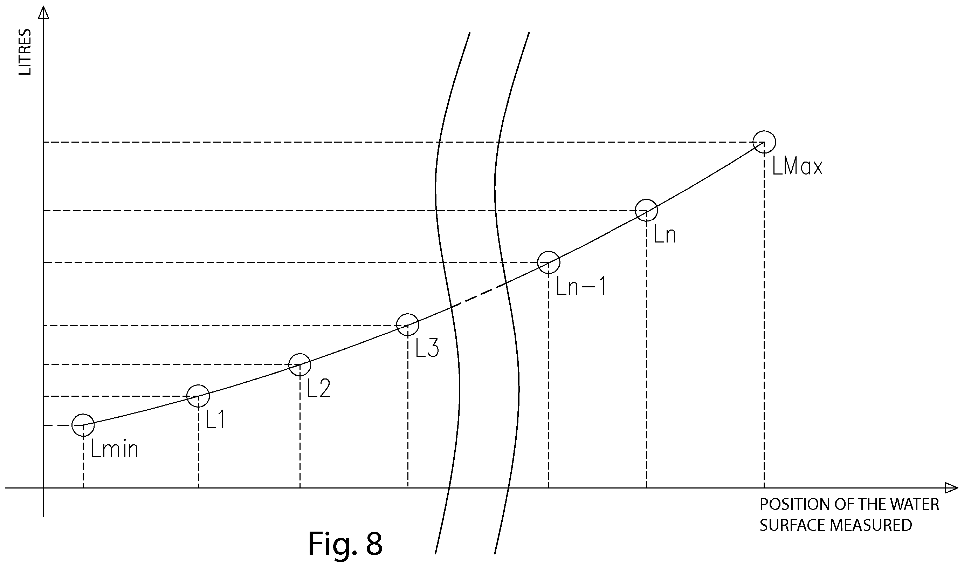

Again for this purpose, the logic unit 11 or other logic unit can memorise and apply to the output signal of the sensor 15 a calibration curve, shown, by way of example, in Figure 8, which correlates the height of the water surface in the container 9 with the quantity of water present in the container 9.

Preferably, once the cold phase has started, the control container 9 is not further filled or topped up with water ad in this case the logic unit 11 registers and considers the new addition.

For this reason, on the basis of the measurements of the sensor 15 the logic unit or in any case the control system 11 determines - preferably in real time, or in any case at predetermined intervals of time but preferably continuously over time - the level of the water in the container 9, and consequently, as it is a closed circuit substantially free of losses - which are usually negligible due, for example, to sprays and evaporation, and these may in any case be taken into account - the variation of water transformed into ice, determining the weight and the thickness of the slab of ice as it is gradually formed on the cooling surface 7 and, when it detects that the thickness has reached the desired value, activates the defrosting process to favour the detachment of the slab of ice from the cooling surface 7, determining the end of the cold phase and the start of the warm phase of the operation of the device 1.

If the surface 7' is formed on an evaporator, of a cooling system with a heat transfer fluid or coolant, the evaporator can be defrosted, for example, by introducing in its coil the same heat transfer fluid suitably warm.

Once detached from the surface 7, the slab of ice can be removed, for example, by hand by an operator and, for example, ground if it is to be used for producing ground ice, or simply kept in a heat-insulated store such as, for example, the store 119 made in the body of the device 1" (Figure 10) or in separate stores.

Compared with the current systems for measuring the thickness of the ice, which determine when the thickness is reached by measuring the presence of water generated by a cascade of water which is irregular and variable over time due to the appearance of lime deposits, the measurement of the progress of the formation of the slab of ice by the devices 1', 1" is much less disturbed and subject to measurement errors and imprecisions and therefore allows a greater precision and uniformity in the production.

Moreover, the continuous and precise measurement of the temperature of the water together with the speed of formation of the ice allows those under-cooling conditions with respect to zero degrees to be avoided, which cause in some conditions the formation of frozen slush, that influences the pumping capacity of the water recirculation pump and, consequently, the quality and quantity of the ice produced.

When the conductivity sensor 154 detects that the electrical conductivity of the water contained in the tank or other control container 9 and, for example, in which it is immersed, is equal to or greater than a predetermined threshold, which indicates an excessive concentration of mineral salts and in particular of limescale, the control system 11 can request the renewal of the water by emitting an alarm signal - for example visual, acoustic or electronic - and, if necessary, block the operation of the device 1, until the water in the tank or other control container 9 is replaced with water with less limescale and mineral salts, avoiding, on the one hand, excessive concentrations and encrustations of limescale on the sensor 15 and in the tank 9, and, on the other hand, changing the water of the tank 9 only when actually necessary and therefore wasting less water.

According to another embodiment, not illustrated, the device 1 can be programmed or in any case designed for comparing with a first and a second concentration threshold the concentration of mineral salts in the water of the control container 9, 9' and automatically actuating the following operations:
- if the concentration of mineral salts in the water is greater than the first concentration threshold of the device 1', the old water is discharged and new water with fewer mineral salts is introduced, without emitting alarm signals;
- if the concentration of mineral salts in the water is greater than the second concentration threshold of the device 1', as well as replacing the old water with new water an alarm signal is emitted, for example inviting the replacement of the water filters.

The temperature sensor 152 allows the monitoring - for example, in real time or in any case at predetermined time intervals, which are sufficiently frequent - of any phenomena of under-cooling of the water in the tank or other control container 9, these phenomena being due to a fall in the temperature of the evaporator, or more generally the cooling surface 7, which is too slow.

The under-cooling of the water, that is to say, below its freezing temperature, often causes the formation of frozen slush which obstructs the good operation of the device 1, especially if equipped with a water recirculation pump 103.

The device for producing ice 1 can, for example, be designed for introducing warmer mains water in the control container 9 when the temperature sensor 152 detects a temperature equal to or lower than the critical threshold for undercooling.

It can be seen from the above description that the device 1, in particular thanks to its level sensor 15, is able to measure with greater precision and constantly the quantity of ice gradually formed over time during each cold phase, allowing the reaching of the desired thickness - or weight - of the slab of ice in the ice forming station 5 to be determined with greater precision.

Since it is located in a housing 90 adjacent to or in any case very close to the tank or other control container 9, the capacitive level sensor 15 can be easily reached and cleaned of any encrustations, or in any case by means of an automatic cleaning cycle which uses descaling products, and without the need to have reached the innermost parts of the machine 1', 1" or other device for producing ice 1', 1".

Since the capacitive sensor 15, 15', 15" does not have moving parts it requires much less maintenance compared with known mechanical or electromechanical level sensors.

Enclosing various sensors or probes, such as, for example, the capacitive level sensor, the temperature probe 152 and any conductivity sensor 154, in a same shell or protective casing 150, 150' also facilitates and considerably speeds up the maintenance, repair and replacement of the sensor 15, 15', 15".

Providing a relatively continuous measurement and in real time of the thickness or weight of the ice formed at a certain instant allows a better and more precise planning of the automatic production of ice even over time.

For example by knowing, even from historical data, that in order to produce the desired quantity of ice requires two hours of operation of the machine between the cold and warm phase, it is possible to program the automatic switching on at, for example, 4 a.m. to have at 6 a.m., that is, at the desired time, the ice ready and fresh, preventing it from deteriorating by remaining unused in the ice forming station after production.

Moreover, since it is an essentially electrical/electronic component, the level sensor 15 does not require mechanical calibration operations performed by an operator directly on the machine, but can be calibrated remotely, for example by transmitting calibration commands by means of the Internet or WiFi, Zigbee or Bluetooth networks or other networks and local communication systems.

The embodiments described above can be modified and adapted in several ways without thereby departing from the scope of the inventive concept.

For example, the logic unit of the control system 11 can comprise not only an electronic microprocessor but also a mechanical, electromechanical or wired logic unit.
The level sensor 15, 15', 15" can comprise not only armatures of a hypothetical capacitor 17, 17', 19 but also other types of sensitive elements for measuring electrical capacitance variations.

Each reference in this description to an "embodiment", "an example embodiment" means that a particular characteristic or structure described with regard to that embodiment is included in at least one embodiment of the invention and specifically in a particular variant of the invention, as defined in a main claim.

The fact that these expressions appear in various parts of the description does not imply that they are necessarily referred only to the same embodiment.

Moreover, when a characteristic, element or structure is described in relation to a particular embodiment, it should be noted that it falls within the skills the average technician to apply the characteristic, element or structure to other embodiments.

Numerical references which differ only in terms of different superscripts, e.g. 21', 21", 21"', indicate, unless specified otherwise, different variants of an element named in the same way.

For example, any materials and dimensions may be used, depending on the technical requirements.

It should be understood that an expression of the type "A *comprises* B, C, D" or "A *is formed by* B, C, D" also comprises and describes the particular case in which "A *consists of* B, C, D".

The expression *"A comprises an element B"* is to be understood as *"A comprises one or more elements B*" unless otherwise specified.

The examples and lists of possible variants of the invention are to understood as non-exhaustive lists.

## Claims

1. A device for producing ice (1', 1") comprising:
- a control container (9) designed to contain water;
- an ice forming station (5) in turn comprising a cooling surface (7, 7') designed to come into contact with water coming from the control container (9), cooling it and transforming it into ice; and
- a level sensor (15, 15', 15") designed for measuring the level of the water in the control container (9);
- a control system (11) designed for controlling the cooling surface (7, 7') on the basis of the measurements of the level sensor (15, 15', 15");
**characterised in that** the level sensor (15, 15', 15") is immersed in the water contained in said control container (9) or is fixed to an outer wall of said control container (9) and comprises one or more sensitive elements (17, 19), said level sensor (15, 15', 15") being configured to to measure the water level in the control container (9) by measuring an electrical capacitance associated with the quantity of water present in the control container (9), said device (1', 1") being designed to determine the quantity and/or the thickness of the ice which covers the cooling surface (7, 7') on the basis of the variations of the water level in the control container (9) or on the basis of the difference between the quantity of water added in the control container (9) and drawn from it.

2. The device for producing ice (1', 1") according to claim 1, wherein the one or more sensitive elements (17, 19) measure the electrical capacitance associated with the quantity of water present in the control container (9) starting from the quantity of electrical charge present in the one or more sensitive elements (17, 19).

3. The device for producing ice (1', 1") according to claim 1, wherein the one or more sensitive elements (17, 17', 19) form one or more positive and/or negative armatures of a capacitor, wherein said level sensor (15, 15', 15") measures the electrical capacitance.

4. The device for producing ice (1', 1") according to any one of claims 1 to 3, wherein said one or more sensitive elements (17, 17', 19) each have the shape of an item selected from the following: a plate, a strip, a wire or cord, a notch, possibly flat, a square button, a rectangular button with a substantially squat shape, a round or rounded button, a boss.

5. The device for producing ice (1', 1") according to claim 3, wherein at least one armature (17, 17') of said level sensor (15', 15") extends at least over a fourth of the height (HC) of the control container (9), where the height (HC) is considered at or close to the point wherein the level sensor (15, 15') is situated.

6. The device for producing ice (1', 1") according to any one of the preceding claims, wherein the level sensor (15) comprises a plurality of sensitive elements (19) which form a plurality of only positive or only negative armatures of said capacitor and the assembly of the sensitive elements (10) extends at least over a quarter of the height (HC) of the control container(9), where the height (HC) is considered at or close to the point at which the level sensor (15, 15') is situated.

7. The device for producing ice (1', 1") according to any one of the preceding claims, wherein the level sensor (15, 15', 15") comprises an outer protective casing (150) having, for example, the shape of a rod, tab, carton, cylinder, bar and/or substantially oblong shape, and the outer protective casing (150) comprises at least partially said one or more sensitive elements (17, 17', 19).

8. The device for producing ice (1', 1") according to claim 7, wherein the outer protective casing (150) contains at least partially a temperature probe or other sensor (152) and/or an electrical conductivity sensor (154) for determining the quantity of lime or other mineral salts dissolved in the water contained in the control container (9) or deposited on the walls of the control container (9) and/or on the level sensor (15, 15', 15").

9. A process for determining the quantity and/or thickness of the ice produced by a device for producing ice, comprising the following operations:
- providing a device for producing ice having the features according to any one of claims 1 to 8;
- measuring the variations of the level of water contained in the control container (9) whilst the cooling surface (7, 7') is active and cooling water coming from the control container (9), freezing it;
- by means of the measurements of said step of measuring variations of the level of water contained in the control container(9), determining the quantity and/or the thickness of the ice formed by the cooling surface (7, 7').

## Patentansprüche

1. Vorrichtung zur Herstellung von Eis (1', 1"), umfassend:
- einen Steuerungsbehälter (9), der dazu ausgestaltet ist, Wasser aufzunehmen;
- eine Eisformungsstation (5), die wiederum eine Kühlfläche (7, 7') umfasst, die dazu ausgestaltet ist, mit aus dem Steuerungsbehälter (9) kommenden Wasser in Kontakt zu kommen, es zu kühlen und in Eis umzuwandeln; und
- einen Füllstandsensor (15, 15', 15"), der zur Messung des Wasserfüllstands in dem Steuerungsbehälter (9) ausgestaltet ist;
- ein Steuerungssystem (11), das zur Steuerung der Kühlfläche (7, 7') auf der Grundlage der Messungen des Füllstandsensors (15, 15', 15") ausgelegt ist;
**dadurch gekennzeichnet, dass** der Füllstandsensors (15, 15', 15") in das in dem Steuerungsbehälter (9) aufgenommene Wasser eingetaucht ist oder an einer Außenwand des Steuerbehälters (9) befestigt ist und ein oder mehrere sensitive Elemente (17, 19) umfasst, wobei der Füllstandsensor (15, 15', 15") dazu konfiguriert ist, den Wasserfüllstand in dem Steuerungsbehälter (9) durch Messen einer elektrischen Kapazität zu messen, die der Menge des in dem Steuerungsbehälter (9) vorhandenen Wassers zugeordnet ist, wobei die Vorrichtung (1', 1") dazu ausgestaltet ist, die Menge und/oder die Dicke des Eises, das die Kühlfläche (7, 7') bedeckt, auf der Grundlage der Veränderungen des Wasserfüllstands im Steuerungsbehälter (9) oder auf der Grundlage der Differenz zwischen der in den Steuerungsbehälter (9) eingefüllten und der aus ihm entnommenen Wassermenge zu bestimmen.

2. Vorrichtung zur Herstellung von Eis (1', 1") nach Anspruch 1, wobei das eine oder die mehreren sensitiven Elemente (17, 19) die elektrische Kapazität, die der im Steuerungsbehälter (9) vorhandenen Wassermenge zugeordnet ist, ausgehend von der Menge an elektrischer Ladung in dem einen oder den mehreren sensitiven Elementen (17, 19) messen.

3. Vorrichtung zur Herstellung von Eis (1', 1") nach Anspruch 1, wobei das eine oder die mehreren sensitiven Elemente (17, 17', 19) einen oder mehrere positive und/oder negative Anker eines Kondensators bilden, wobei der Füllstandsensor (15, 15', 15") die elektrische Kapazität misst.

4. Vorrichtung zur Erzeugung von Eis (1', 1") nach einem der Ansprüche 1 bis 3, wobei das eine oder die mehreren sensitiven Elemente (17, 17', 19) jeweils die Form eines Gegenstandes haben, der aus den folgenden ausgewählt ist: eine Platte, ein Streifen, ein Draht oder eine Schnur, eine Kerbe, möglicherweise flach, ein quadratischer Knopf, ein rechteckiger Knopf mit einer im Wesentlichen kompakten Form, ein runder oder abgerundeter Knopf, ein Buckel.

5. Vorrichtung zur Herstellung von Eis (1', 1") nach Anspruch 3, wobei sich wenigstens ein Anker (17, 17') des Füllstandsensors (15', 15") wenigstens über ein Viertel der Höhe (HC) des Steuerungsbehälters (9) erstreckt, wobei die Höhe (HC) an oder nahe der Stelle betrachtet wird, an der sich der Füllstandsensor (15, 15') befindet.

6. Vorrichtung zur Herstellung von Eis (1', 1") nach einem der vorhergehenden Ansprüche, wobei der Füllstandsensor (15) eine Vielzahl von sensitiven Elementen (19) umfasst, die eine Vielzahl von nur positiven oder nur negativen Ankern des Kondensators bilden, und wobei sich die Anordnung der sensitiven Elemente (10) wenigstens über ein Viertel der Höhe (HC) des Steuerungsbehälters (9) erstreckt, wobei die Höhe (HC) an oder nahe der Stelle betrachtet wird, an der sich der Füllstandsensor (15, 15') befindet.

7. Vorrichtung zur Herstellung von Eis (1', 1") nach einem der vorhergehenden Ansprüche, wobei der Füllstandsensor (15, 15', 15") ein äußeres Schutzgehäuse (150) umfasst, das beispielsweise die Form einer Stange, einer Lasche, eines Kartons, eines Zylinders, eines Balkens und/oder eine im Wesentlichen längliche Form aufweist, und wobei das äußere Schutzgehäuse (150) wenigstens teilweise das eine oder die mehreren sensitiven Elemente (17, 17', 19) umfasst.

8. Vorrichtung zur Herstellung von Eis (1', 1") nach Anspruch 7, wobei das äußere Schutzgehäuse (150) wenigstens teilweise eine Temperatursonde oder einen anderen Sensor (152) und/oder einen elektrischen Leitfähigkeitssensor (154) zur Bestimmung der Menge an Kalk oder anderen Mineralsalzen enthält, die in dem vom Steuerungsbehälter (9) aufgenommenen Wasser gelöst sind oder sich an den Wänden des Steuerungsbehälters (9) und/oder an dem Füllstandsensor (15, 15', 15") abgesetzt haben.

9. Verfahren zur Bestimmung der Menge und/oder Dicke des Eises, das mittels einer Vorrichtung zur Herstellung von Eis hergestellt worden ist, umfassend die folgenden Vorgänge:
- Bereitstellen einer Vorrichtung zur Herstellung von Eis, welche die Merkmale nach einem der Ansprüche 1 bis 8 aufweist;
- Messen der Veränderungen des Füllstands von dem im Steuerungsbehälter (9) aufgenommenen Wasser während die Kühlfläche (7, 7') aktiv ist und das aus dem Steuerungsbehälter (9) kommende Kühlwasser und einfriert;
- Bestimmen der Menge und/oder der Dicke des von der Kühlfläche (7, 7') gebildeten Eises mittels der Messungen aus dem Schritt der Messung von Veränderungen des Füllstands von im Steuerungsbehälter (9) aufgenommenem Wasser.

## Revendications

1. Dispositif de production de glace (1', 1") comprenant :
- un récipient de commande (9) conçu pour contenir de l'eau ;
- une station de formation de glace (5) comprenant à son tour une surface de refroidissement (7, 7') conçue pour entrer en contact avec l'eau provenant du récipient de commande (9), la refroidir et la transformer en glace ; et
- un capteur de niveau (15, 15', 15") conçu pour mesurer le niveau de l'eau dans le récipient de commande (9) ;
- un système de commande (11) conçu pour commander la surface de refroidissement (7, 7') sur la base des mesures du capteur de niveau (15, 15', 15") ;
**caractérisé en ce que** le capteur de niveau (15, 15', 15") est immergé dans l'eau contenue dans ledit récipient de commande (9) ou est fixé sur une paroi externe dudit récipient de commande (9) et comprend un ou plusieurs éléments sensitifs (17, 19), ledit capteur de niveau (15, 15', 15") étant configuré pour mesurer le niveau d'eau dans le récipient de commande (9) en mesurant une capacité électrique associée à la quantité d'eau présente dans le récipient de commande (9), ledit dispositif (1', 1") étant conçu pour déterminer la quantité et/ou l'épaisseur de la glace qui recouvre la surface de refroidissement (7, 7') sur la base des variations du niveau d'eau dans le récipient de commande (9) ou sur la base de la différence entre la quantité d'eau ajoutée dans le récipient de commande (9) et prélevée à partir de celui-ci.

2. Dispositif de production de glace (1', 1") selon la revendication 1, dans lequel les un ou plusieurs éléments sensitifs (17, 19) mesurent la capacité électrique associée à la quantité d'eau présente dans le récipient de commande (9) à partir de la quantité de charge électrique présente dans les un ou plusieurs éléments sensitifs (17, 19).

3. Dispositif de production de glace (1', 1") selon la revendication 1, dans lequel les un ou plusieurs éléments sensitifs (17, 17', 19) forment une ou plusieurs armatures positives et/ou négatives d'un condensateur, dans lequel ledit capteur de niveau (15, 15', 15") mesure la capacité électrique.

4. Dispositif de production de glace (1', 1") selon l'une quelconque des revendications 1 à 3, dans lequel lesdits un ou plusieurs éléments sensitifs (17, 17', 19) présentent chacun la forme d'un article sélectionné parmi les suivants : une plaque, une bande, un fil ou un cordon, une encoche, éventuellement plate, un bouton carré, un bouton rectangulaire de forme sensiblement trapue, un bouton rond ou arrondi, un bossage.

5. Dispositif de production de glace (1', 1") selon la revendication 3, dans lequel au moins une armature (17, 17') dudit capteur de niveau (15', 15") s'étend au moins sur un quart de la hauteur (HC) du récipient de commande (9), où la hauteur (HC) est considérée au niveau ou à proximité du point où est situé le capteur de niveau (15, 15').

6. Dispositif de production de glace (1', 1") selon l'une quelconque des revendications précédentes, dans lequel le capteur de niveau (15) comprend une pluralité d'éléments sensitifs (19) qui forment une pluralité d'armatures uniquement positives ou uniquement négatives dudit condensateur et l'assemblage des éléments sensitifs (10) s'étend au moins sur un quart de la hauteur (HC) du récipient de commande (9), où la hauteur (HC) est considérée au niveau ou à proximité du point où est situé le capteur de niveau (15, 15').

7. Dispositif de production de glace (1', 1") selon l'une quelconque des revendications précédentes, dans lequel le capteur de niveau (15, 15', 15") comprend une enveloppe protectrice externe (150) présentant, par exemple, la forme d'une tige, d'une languette, d'un carton, d'un cylindre, d'une barre et/ou une forme sensiblement oblongue, et l'enveloppe protectrice externe (150) comprend au moins partiellement lesdits un ou plusieurs éléments sensitifs (17, 17', 19).

8. Dispositif de production de glace (1', 1") selon la revendication 7, dans lequel l'enveloppe protectrice externe (150) contient au moins partiellement une sonde de température ou un autre capteur (152) et/ou un capteur de conductivité électrique (154) pour déterminer la quantité de chaux ou d'autres sels minéraux dissoute dans l'eau contenue dans le récipient de commande (9) ou déposée sur les parois du récipient de commande (9) et/ou sur le capteur de niveau (15, 15', 15").

9. Procédé de détermination de la quantité et/ou de l'épaisseur de la glace produite par un dispositif de production de glace, comprenant les opérations suivantes :
- la fourniture d'un dispositif de production de glace présentant les caractéristiques selon l'une quelconque des revendications 1 à 8 ;
- la mesure des variations du niveau d'eau contenue dans le récipient de commande (9) tandis que la surface de refroidissement (7, 7') est active et le refroidissement de l'eau provenant du récipient de commande (9), en la congelant ;
- au moyen des mesures de ladite étape de mesure des variations du niveau d'eau contenue dans le récipient de commande (9), la détermination de la quantité et/ou de l'épaisseur de la glace formée par la surface de refroidissement (7, 7').
